# EUROPÄISCHE PATENTSCHRIFT

(11) **EP 0 961 713 B1**
(45) Veröffentlichungstag und Bekanntmachung des Hinweises auf die Patenterteilung: **03.12.2003**
(21) Anmeldenummer: 98954465.5
(22) Anmeldetag: 29.10.1998
(51) Int. Cl.: B60N 2/12

(54) **LÄNGSVERSTELLVORRICHTUNG AN EINEM KRAFTFAHRZEUGSITZ FÜR INSBESONDERE ZWEITÜRIGE KRAFTFAHRZEUGE**
LONGITUDINAL ADJUSTMENT DEVICE IN A VEHICLE SEAT, ESPECIALLY FOR TWO-DOOR MOTOR VEHICLES
DISPOSITIF DE REGLAGE LONGITUDINAL SUR UN SIEGE DE VEHICULE, NOTAMMENT POUR VEHICULES AUTOMOBILES A DEUX PORTES

(30) Priorität: 20.12.1997 DE 19757110
(43) Veröffentlichungstag der Anmeldung: 08.12.1999
(73) Patentinhaber: KEIPER GmbH & Co. KG, 67657 Kaiserslautern (DE)
(72) Erfinder: SCHÜLER, Rolf, D-42579 Heiligenhaus (DE); FLICK, Joachim, D-42499 Hückeswagen (DE); RISCHEWSKI, Ronald, D-79843 Löffingen (DE); EBLE, Ralph, D-78089 Unterkirnach (DE)
(74) Vertreter: Mentzel, Norbert, Dipl.-Phys.
(86) Internationale Anmeldenummer: EP9806872
(87) Internationale Veröffentlichungsnummer: WO99032324

(56) Entgegenhaltungen:
- EP-A- 0 844 132
- EP-A- 0 844 133
- DE-C- 19 613 432

## Beschreibung

Die Erfindung betrifft eine Längsverstellvorrichtung an einem Kraftfahrzeugsitz für insbesondere zweitürige Kraftfahrzeuge, dessen Rückenlehne gegenüber dem Sitzteil mittels eines Stellbeschlages neigungseinstellbar und nach Lösung einer Arretiereinrichtung vorklappbar ist, wobei der Sitzteil an in fahrzeugfesten Führungsschienen verschiebbar angeordneten Laufschienen befestigt ist, und wenigstens eine Laufschiene eine aus der Verbindung mit der Führungsschiene lösbare Verriegelangseinrichtung aufweist, der eine die Wiederauffindung der eingestellten Sitzlängslage ermöglichende Positioniereinrichtung zugeordnet ist, die eine Positionierscheibe mit einer Außenverzahnung umfasst, in welche das Zahnsegment eines in Bezug auf die Laufschiene ortsfest gelagerten, bedarfsweise aussteuerbaren Arretierhebels eingreift, wobei koaxial zur Positionierscheibe eine federgespannte Wickeltrommel gelagert ist, mit welcher über ein am Fahrzeugboden oder an der Führungsschiene festgelegtes Zugglied der Sitzteil nach vorn verschiebbar ist, und die Wickeltrommel einen Anschlag zur Begrenzung ihrer Rückdrehbewegung durch einen Gegenanschlag an der Positionierscheibe aufweist.

Eine Längsverstellvorrichtung der vorgenannten Art ist aus der DE 196 47 447 entnehmbar, bei welcher die Verriegelungseinrichtung zur Sitzlängsverschiebung auf zweierlei Weise gelöst werden kann. Zum einen lässt sich durch Anheben eines Auslösebügels im vorderen Bereich unterhalb des Sitzteiles über einen Querhebel die an der Laufschiene festgelegte Verriegelungseinrichtung aus ihrer Verbindungslage mit der Führungsschiene lösen, indem die Sperrklauen der Verriegelungseinrichtung aus der Zahnreihe der Führungsschiene gegen die Kraft selbst rückstellender Federn ausgehoben werden. Dabei nimmt der Endbereich des Auslösebügels einen Verbindungshebel im Lösesinne mit, der seinerseits das Zahnsegment eines Arretierhebels aus der Außenverzahnung einer Positionierscheibe aushebt. In diesem Fall ist die zuvor eingestellte Endanschlagslage zur Wiederauffindung der eingestellten Sitzposition aufgehoben. Um jedoch bei aufrechterhaltener Endanschlagslage eine Verschiebung des Fahrzeugsitzes vornehmen zu können, wird über einen an der Laufschiene gelagerten Losehebel der Verbindungshebel vom Auslösebügel gelöst, so dass der Arretierhebel unbehelligt bleibt, wodurch die Sperrlage der Positionierscheibe aufrechterhalten wird. Jedoch drückt dabei gleichzeitig der Losehebel den Auslösebügel auf den Querhebel, so dass dieser die Sperrklauen der Verriegelungseinrichtung aus der Zahnreihe der Führungsschiene aushebt Damit bleibt die zuvor eingestellte Anschlagposition im Memory-Modul erhalten, während sich der Sitzteil mit der vorgeklappten Rückenlehne nach vorn und zurück zu dem zuvor eingestellten Anschlag schieben lasst Zur Unterstützung der Vorschiebebewegung des Sitzes dient eine zuvor angesprochene, im Sinne des Vorschiebens federbeaufschlagte Wickeltrommel, die über ein Zugglied mit dem Fahrzeugboden im vorderen Bereich der Schienenanordnung oder aber mit dem vorderen Ende der Fuhrungsschiene verbunden ist Die Anschlaglage für die Wiederauffindung der eingestellten Sitzlängslage lässt sich beim Zurückschieben des Fahrzeugsitzes einstellen, indem über die Drehbewegung der Wickeltrommel und einen an dieser vorhandenen Anschlag der Anschlag der Positionierscheibe solange mitgenommen wird, bis nach Beendigung der Rückschiebebewegung des Sitzes die Verriegelungseinrichtung die Laufschiene gegenüber der Führungsschiene arretiert. In diesem Moment erfolgt auch infolge Rückschwenkung des Auslösebügels eine Festlegung der Positionierscheibe durch den Arretierhebel, so dass die dann erreichte Stellung des Anschlages an der Positionierscheibe festgelegt wird. Um nun mehrere Umdrehungen der Wickeltrommel zulassen zu können, ohne die Positionierscheibe lösen zu müssen, sind zwischen den Anschlag der Positionierscheibe und den Anschlag der Wickeltrommel zwei Anschlagringe geschaltet, die ihrerseits selbst Anschläge aufweisen, die nacheinander von der Wickeltrommel mitgenommen werden können. Bei aufrechterhaltener Anschlaglage der Positionierscheibe kommt dann beim Zurückschieben des Sitzes der Anschlag der Wickeltrommel über die Anschläge der Anschlagscheiben in eine Anschlaglage gegenüber dem Anschlag der Positionierscheibe. Die Montage der Anschlagringe erfordert eine funktionsgerechte Hintereinanderanordnung der Anschlagringe, da andernfalls keine Wiederauffindung der eingestellten Sitzposition möglich ist. Darüber hinaus ist bei großen Verschiebewegen die Anzahl der hintereinander angeordneten Anschlagringe zu erhöhen, wodurch breiter Bauraum benötigt wird und höhere Kosten entstehen.

Aufgabe der Erfindung ist es, eine Längsverstellvorrichtung der eingangs genannten Art dahingehend zu verbessern, dass einerseits die vorgenannten Nachteile vermieden werden können und andererseits die Anzahl der Bauteile. insbesondere des Memory-Moduls verringert werden kann. Diese Aufgabe ist mit den im Kennzeichen des Patentanspruchs 1 genannten Mitteln gelöst Dadurch können Anschlagringe, wie sie bei der eingangs beschriebenen Lösung zum Stand der Technik verwendet worden sind bei der erfindungsgemäßen Lösung vollständig entfallen Ein weiterer Vorteil ist darin zu sehen, dass je nach Gestaltung der Spiralkulisse und des Kulissensteines im Bedarfsfall mehr als etwa nur zwei mit den gemäß dem Stand der Technik bekannten Anschlagringen möglichen Umdrehungen der Wickeltrommel erzielt werden können, so dass durchaus längere Verschiebewege der Laufschiene gegenüber der Führungsschiene möglich sind.

Eine praktische Ausbildung von Spiralkulisse und Kulissenstein lässt sich vorzugsweise erzielen, indem der Kulissenstein als Kreisringsegment ausgebildet ist und mit einer Führungsrippe in die als Nut in die Seitenwand der Positionierscheibe eingetiefte Spiralkulisse eingreift. Dabei ist die Spiralkulisse vorzugsweise derart ausgebildet, dass sie mit geringem radialen Abstand zur Nabe der Positionierscheibe beginnt und am radial knapp unterhalb der Sperrverzahnung angeordneten Gegenanschlag an der Positionierscheibe endet, wobei die Spiralkulisse eine solche Steigung aufweist, dass der Kulissenstein vor seinem letzten, mit seiner Bewegungskomponente radial nach außen gerichteten Umlauf sich unter dem Gegenanschlag der Positionierscheibe vorbeibewegen kann.

Eine präzise Radialführung des Kulissensteines bei sich drehender Positionierscheibe lässt sich dadurch erzielen, dass aus den beiden Stirnseiten des Kulissensteines jeweils ein zur Nabe der Positionierscheibe gerichteter Führungsfinger austritt, wobei die gabelförmig zueinander angeordneten Führungsfinger die Nabe an ihrem Außenumfang tangierend übergreifen. Dabei versteht es sich, dass die Führungsfinger eine solche Länge aufweisen müssen. dass sie auch noch dann mit dem Außenmantel der Nabe der Positionierscheibe in Kontakt bleiben, wenn der größtmögliche radiale Abstand des Kulissensteines von der Nabe der Positionierscheibe erreicht ist.

Wie bereits zuvor erwähnt, ist der Gegenanschlag der Positionierscheibe und der Anschlag der Wickeltrommel zugeordnet. Dabei lässt sich der Anschlag der Wickeltrommel vorzugsweise durch die Außenwände einer Einschubtasche für eine Halteplombe des Zuggliedes bilden.

Zur ungehinderten Drehung der Wickeltrommel gegenüber der Positionierscheibe steht der Gegenanschlag der Positionierscheibe nur soweit in axialer Richtung von deren Seitenwand ab, dass Rippen und Einschubtasche der Wickeltrommel frei am Gegenanschlag vorbei drehbar sind. Was die axiale Erstreckung des Kulissensteines betrifft, so ist diese größer als die axiale Erstreckung des Gegenanschlages, da der Kulissenstein bei Anlage am Gegenanschlag der Positionierscheibe auch ein Wiederlager für den Anschlag der Wickeltrommel bilden muss.

Die Erfindung ist in einem Ausführungsbeispiel auf der Zeichnung dargestellt und wird nachfolgend näher erläutert. Es zeigen:
- Fig. 1: einen schematisch dargestellten Fahrzeugsitz in einer Seitenansicht,
- Fig. 2: ein auf einer Sitzlängsseite angeordnetes Schienenpaar eines die Längsverstellvorrichtung umfassenden Fahrzeugsitzes in einer Seitenansicht von der Sitzinnenseite her gesehen,
- Fig. 3: das aus Fig. 2 ersichtliche Schienenpaar mit der Sitzlängsverstellvorrichtung in einer Draufsicht,
- Fig. 4a-4c: den hinteren Bereich des manuell betätigbaren Auslösebügels in drei verschiedenen Stellungen, wovon die Stellung gemäß Fig. 4a die Ruhelage, die Stellung gemäß Fig. 4b die Auslösung der Verriegelungseinrichtung infolge der Vorschwenkung der Rückenlehne und die Stellung gemäß Fig. 4c Auslösung der Verriegelungseinrichtung und der Positioniereinrichtung durch Verschwenkung des Auslösebügels darstellt,
- Fig. 5: die Positioniereinrichtung in einem Längsschnitt nach der Linie V - V von Fig. 4a,
- Fig. 6: die aus Fig. 5 ersichtliche Positioniereinrichtung in einem Querschnitt nach der Linie VI - VI von Fig. 5,
- Fig. 7: die aus Fig. 5 ersichtliche Positioniereinrichtung in einem Querschnitt nach der Linie VII - VII von Fig. 5,
- Fig. 8: die Verriegelungseinrichtung und das Schienenpaar in einem Querschnitt nach der Linie VIII - VIII von Fig. 2,
- Fig. 9: die eine Positioniereinrichtung umfassende Längsverstelleinrichtung zusammen mit einem Schienenpaar in perspektivischer Ansicht auf die Innenseite des Schienenpaares gesehen.

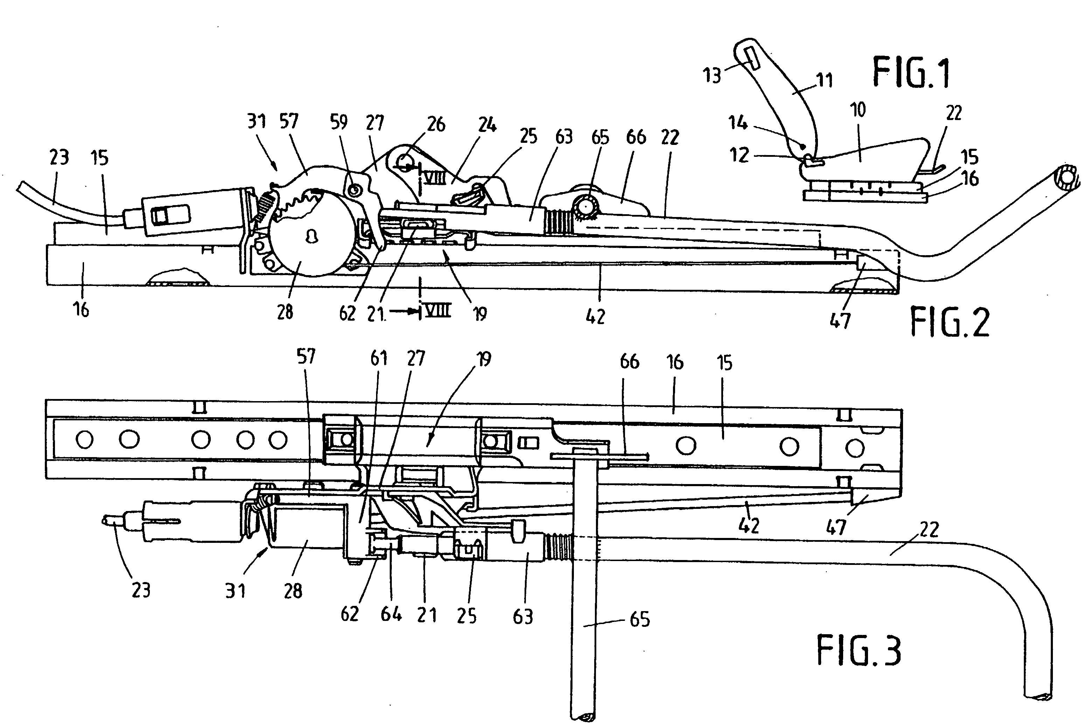

Der in Fig. 1 schematisch dargestellte Fahrzeugsitz besteht aus einem Sitzteil 10 und einer damit über einen nicht dargestellten Gelenkbeschlag neigungseinstellbar verbundenen Rückenlehne 11, die außerdem durch eine mit der Arretiereinrichtung 12 verbundene Handhabe 13 gegenüber dem Sitzteil 10 um einen Schwenkpunkt 14 vorklappbar ist. Der Sitzteil 10 ist mit seiner Unterseite auf beiden Sitzlängsseiten mit einer Laufschiene 15 verbunden, die in eine jeweils am Fahrzeugboden festgelegte Führungsschiene 16 eingreift.

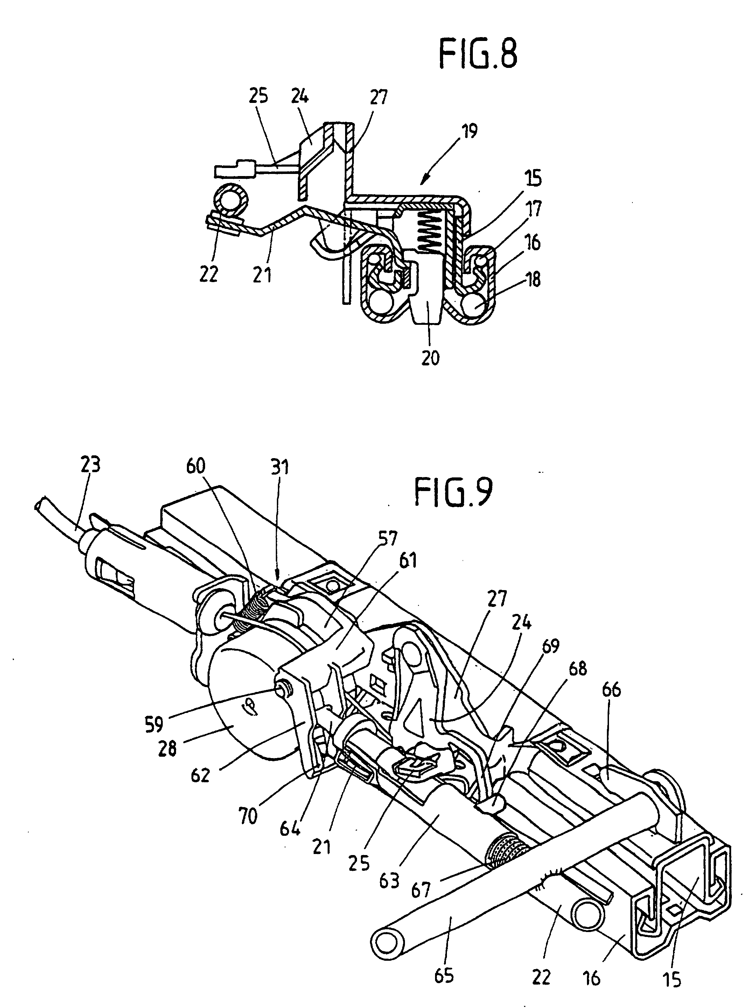

Die Laufschiene 15 ist - wie insbesondere aus Fig. 8 entnommen werden kann - an der Führungsschiene 16 über Wälzkörper 17 und 18 längsverschiebbar abgestützt. An ihrem aufgewölbten Boden weist die Führungsschiene 16 in Längsrichtung hintereinander abstandsweise angeordnete, nicht näher bezeichnete Durchbrüche auf, welche eine Zahnreihe bilden. In diese Durchbrüche weist wenigstens einer von mehreren Sperrklauen 20 ein, die Bestandteil einer an der Laufschiene 15 festgelegten Verriegelungseinrichtung 19 sind, die durch einen ebenfalls an der Laufschiene 15 gelagerten Querhebel 21 gegen Federwirkung lösbar sind, indem ein ebenfalls an der Laufschiene 15 gelagerter Auslösebügel 22 betätigbar ist. Die der Sitzlängsverstelleinrichtung zugehörige Verriegelungseinrichtung 19 ist jedoch auch durch die an der Rückenlehne 11 angeordnete Handhabe 13 zusammen mit der Arretiereinrichtung 12 der Rückenlehne auslösbar, indem über einen Bowdenzug 23 ein Lösehebel 24 betätigbar ist. Dieser Lösehebel wirkt über eine Abwinklung 25 im Lösesinne auf den Auslösebügel 22 und somit auch auf den Querhebel 21 zur Lösung der Sperrklauen 20 aus der Zahnreihe der Führungsschiene 16 ein. Mittels eines Zapfens 26 ist der Lösehebel an einer Halteplatte 27 gelagert, die ihrerseits an der Laufschiene 15 festgelegt ist. An dieser Halteplatte 27 ist ebenfalls ein aus einem Gehäuseunterteil 29 und einem Gehäuseoberteil 30 bestehendes Gehäuse 28 festgelegt, welches die Positioniereinrichtung 31 mit einer als Drehglied ausgebildeten Wickeltrommel 32 aufnimmt.

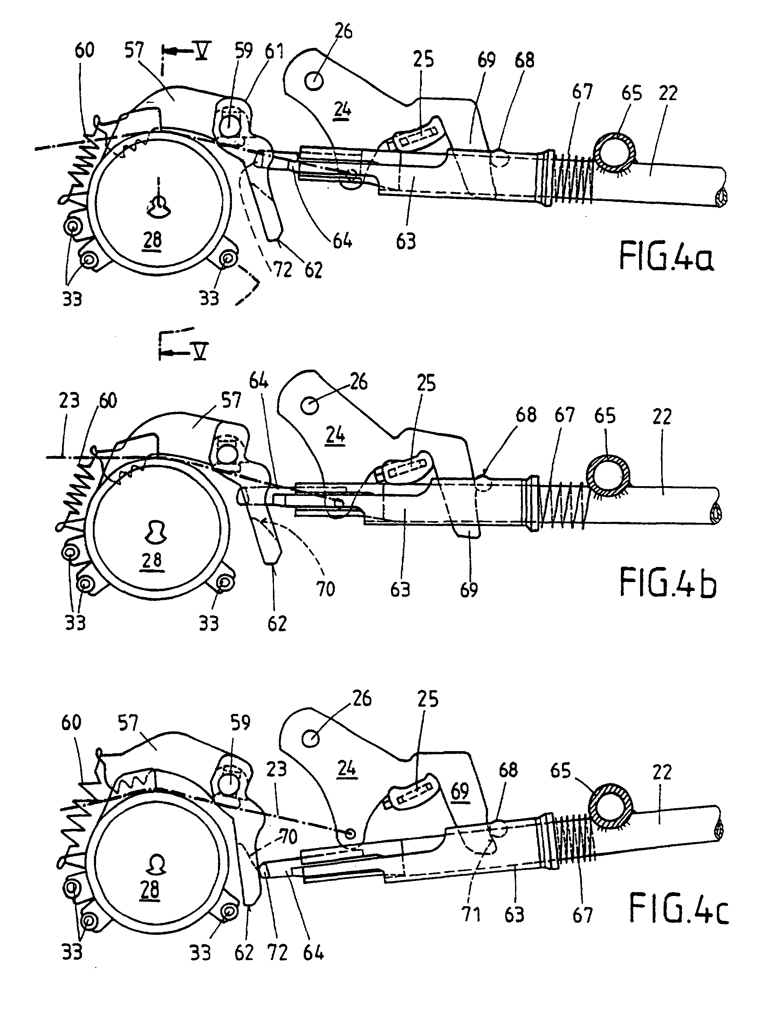

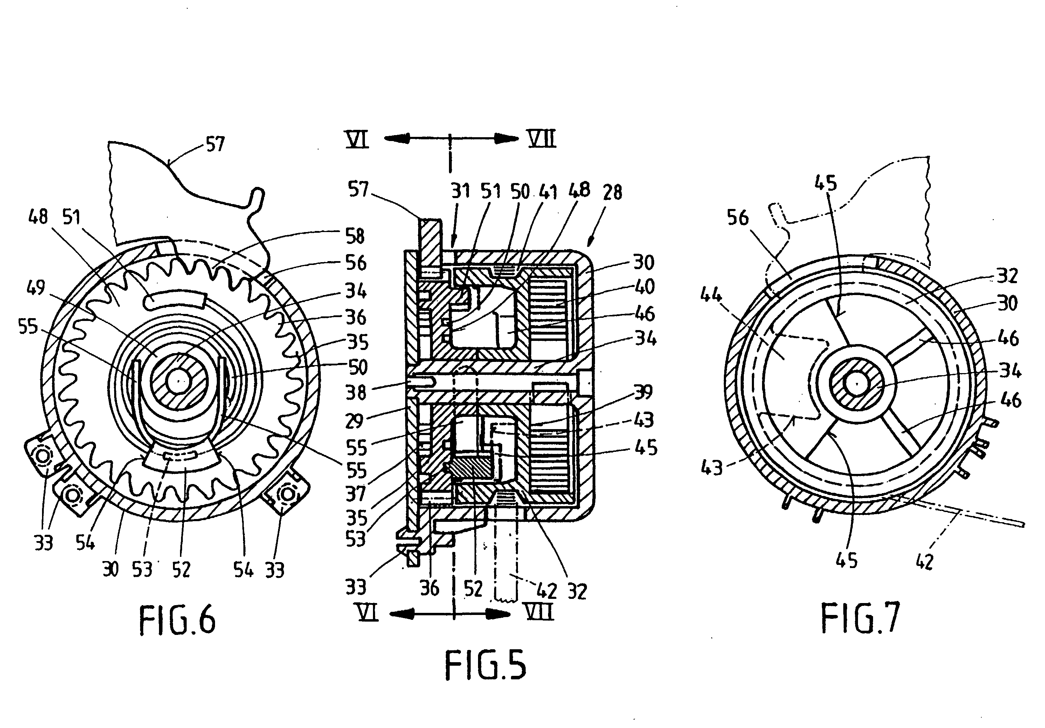

Der aus Fig. 5 ersichtliche, dosenförmig ausgebildete Gehäuseoberteil 30 ist über randseitige Clipsansätze 33, die auch aus den Fig. 4a bis 4c zu entnehmen sind, mit dem scheibenförmigen Gehäuseunterteil 29 verbunden, wobei dieser Gehäuseunterteil 29 in nicht näher dargestellter Weise fest mit der der Laufschiene 15 zugeordneten Halteplatte 27 verbunden ist Am topfförmigen Gehäuseoberteil 30 befindet sich in dessen Zentrum eine nach innen vorragende Achse 34. Auf dieser Achse 34 ist eine Positionierscheibe 35 drehbar gelagert, die an ihrem gesamten Außenumfang eine Sperrverzahnung 36 aufweist Auf ihrer dem scheibenförmigen Gehäuseunterteil 29 zugewandten Stirnseite weist die Positionierscheibe 35 eine Aussparung auf. in welcher eine als Drehfeder fungierende Spiralfeder 37 angeordnet ist, die mit ihrem inneren abgewinkelten Federende in eine Ausnehmung 38 der Achse 34 eingreift, während ihr äußeres Federende in nicht näher dargestellter Weise am Umfangsbereich der Aussparung der Positionierscheibe 35 festgelegt ist.

Zusammen mit der Positionierscheibe 35 ist auf der Achse 34 die zuvor bereits erwähnte Wickeltrommel 32 unabhängig von der Positionierscheibe drehbar gelagert. Die Wickeltrommel 32 weist auf ihrer von der Positionierscheibe 35 wegweisenden Seite eine Aussparung 39 auf, die ebenfalls eine als Drehfeder fungierende Spiralfeder 40 aufnimmt, die in bekannter Weise mit ihrem inneren Federende an der Achse 34 und mit ihrem äußeren Federende am Außenmantel der Wickeltrommel 32 festgelegt ist. Der Außenmantel der Wickeltrommel 32 weist eine Einschnürung 41 auf, die den Aufnahmeraum für ein an der Wickeltrommel festgelegtes, beispielsweise bandförmiges Zugglied 42 bildet. Unterhalb der Einschnürung 41 befindet sich eine zum Zentrum der Wickeltrommel 32 gerichtete Einschubtasche 43, in welcher eine mit dem einen Ende des Zuggliedes 42 fest verbundene Halteplombe 44 passt Die beiden sich in axialer Richtung erstreckenden Außenwände der Einschubtasche 43 bilden jeweils einen Anschlag 45, dessen Zweck später beschrieben wird. Außer den die Steifigkeit zwischen dem Außenmantel und der Nabe der Wickeltrommel 32 erhöhenden, den Anschlag 45 bildenden Wandungen der Einschubtasche 42 sind zwischen der Nabe und dem Außenmantel der Wickeltrommel 32 noch Rippen 46 vorgesehen. Am freien Ende des Zuggliedes 42 befindet sich ein Fixierstück 47, mit welchem das Zugglied 42 an der bodenfesten Führungsschiene 16 befestigt ist.

Aus der zur Wickeltrommel 32 gekehrten Seitenwand 48 der Positionierscheibe 35 ragt eine die Achse 34 umfassende Nabe 49 vor In geringem radialen Abstand zu dieser Nabe 49 beginnt eine Spiralkulisse 50, die an einem aus der Seitenwand 48 der Positionierscheibe 35 knapp unterhalb der Sperrverzahnung 36 austretenden Gegenanschlag 51 endet. Dieser Gegenanschlag 51 erhebt sich in axialer Richtung nur so weit über die Seitenwand 48 der Positionierscheibe 35 hinaus, dass sowohl die sich in radialer Richtung erstreckende Begrenzungswandung der Einschubtasche 43 als auch die Rippen 46 der Wickeltrommel 32 an diesem Gegenanschlag 51 frei vorbeigedreht werden können. Die Spiralkulisse 50 wird aus einer in die Seitenwand 48 der Positionierscheibe 35 eingetieften Nut gebildet. In diese, die Spiralkulisse 50 bildende Nut greift mit einer Führungsrippe 53 ein Kulissenstein 52 ein. Dieser als Kreisringsegment ausgebildete Kulissenstein 52 bildet ein Zwischenglied zwischen dem jeweiligen Anschlag 45 der Wickeltrommel 32 und dem Gegenanschlag 51 der Positionierscheibe 35. Die axiale Erstreckung dieses Kulissensteines ist dabei derart gewählt, dass er einerseits am jeweiligen Anschlag 45 der Wickeltrommel und andererseits am Gegenanschlag 51 der Positionierscheibe 35 zur Anlage kommen kann. Zu Führungszwecken tritt aus jeder Stirnseite 54 des Kulissensteines 52 jeweils ein Führungsfinger 55 aus. Diese Führungsfinger 55 sind gabelartig angeordnet, und tangieren selbst bei extremster Radialstellung die Nabe 49 der Positionierscheibe 35 beiderseits.

Der Gehäuseoberteil 30 weist an seinem Umfangsbereich benachbart zum scheibenförmigen Gehäuseunterteil 29 einen Ausschnitt 56 auf, durch welchen ein Arm des aussteuerbaren Arretierhebels 57 mit seinem Zahnsegment 58 in die Sperrverzahnung 36 der Positionierscheibe 35 eingreifen kann. Dieser Arretierhebel 57 ist mittels eines Zapfens 59 an der Halteplatte 27 schwenkbar gelagert und wird mittels einer an einem abstehenden Arm des Gehäuses 28 gehalterten Sperrfeder 60 mit seinem Zahnsegment in Eingriff mit der Sperrverzahnung 36 der Positionierscheibe 35 gehalten. Nun könnte mit dem Arretierhebel 57 in gleicher Weise wie beim zuvor genannten Stand der Technik ein Verbindungshebel gekuppelt sein, der mit einer Fangnase in das Rohr am Endbereich des Auslösebügels aussteuerbar eingreifen kann. Bei der vorliegenden Ausführungsform ist aber zum Arretierhebel 57 in axialer Richtung versetzt dazu an gleicher Nabe 61 ein nach unten weisender Gabelhebel 62 drehfest angeordnet. In den Freiraum zwischen den Schenkeln des Gabelhebels 62 fasst ein Stößel 64 einer Hülse 63, mit einem beiderseits überstehenden Querkopf 72, wobei die Hülse längsverschiebbar, jedoch undrehbar am Endbereich des Auslösebügels 22 angeordnet ist. Der Endbereich des Auslösebügels 22 beginnt hinter dem mit dem Auslösebügel 22 beispielsweise durch Verschweißen fest verbundenen Querrohr 65, durch welches der Auslösebügel 22 in mit den Laufschienen fest verbundenen Lagerböcken 66 schwenkbar abgestützt ist. Am Querrohr 65 stützt sich eine den Auslösebügel 22 umrundende Druckfeder 67 mit ihrem einen Ende ab, deren anderes Ende die Hülse 63 beaufschlagt. Diese den axial geführten Stößel 64 aufweisende Hülse 63 weist einen zur Seite abragenden Zapfen 68 auf, der infolge der Wirkung der Druckfeder 67 in Anlage an einem Stellfinger 69 des Lösehebels 24 gehalten ist. Die Innenseiten der Schenkel des Gabelhebels 62 weisen Steuerkurven 70 auf, mit denen der Stößel 64 beim Niederschwenken des hinteren Bereichs des Auslösebügels 22 in Berührung kommen kann.

Bei der Feststell-Position des Sitzteiles 10 befinden sich der Auslösebügel 22, der Lösehebel 24 und der Arretierhebel 57 mit seinem Gabelhebel 62 in der aus Fig. 4a ersichtlichen Lage. Wenn nun die Sitzlängslage des Fahrzeugsitzes erneut eingestellt werden soll, so wird der Bügelhebel 22 nach oben gezogen, so dass sein hinterer Bereich nach unten verschwenkt. Bei dieser Schwenkbewegung drückt zum einen der Bügelhebel 22 auf den Querhebel 21 (Fig. 8), so dass die Sperrklauen 20 der Verriegelungseinrichtung aus der Zahnreihe der Führungsschiene 16 ausgehoben werden und eine Verschiebung der Laufschiene 15 mit dem daran befestigten Sitz in der einen oder anderen Fahrzeuglängsrichtung möglich ist. Gleichzeitig gelangt aber beim Niederschwenken des hinteren Bereichs des Bügelhebels 22 der Stößel 64 der Hülse 63 mit seinem Querkopf 72 auf die Steuerkurve 70 und drückt den Gabelhebel 62 nach vorn, so dass dieser um den Zapfen 59 im Uhrzeigerdrehsinn verschwenkt, wodurch das Zahnsegment 58 aus der Sperrverzahnung der Positionierscheibe 35 ausgehoben wird. Diese Betätigungslage ist in Fig. 4c dargestellt. Dabei ist rroch darauf hinzuweisen, dass infolge einer um den Mittelpunkt des Querrohres 65 gekrümmten Kreisbahn 71 am Stellfinger 69 des Lösehebels 24 die Hülse 63 und damit auch deren Stößel 64 die Lage gegenüber dem Endbereich des Auslösebügels 22 beibehält, weil nämlich der Lösehebel 24 nicht betätigt wird, da er durch die unveränderte Lage der Rückenlehne 11 in seiner aus den Fig. 4a und 4b ersichtlichen Lage verbleibt. Wenn nun bei der aus Fig. 4c ersichtlichen Betätigungslage der Sitz verschoben wird, so wird infolge Ab- bzw. Aufrollens des Zuggliedes 42 an der Wickeltrommel 32 über deren Anschlag 45, den daran anliegenden Kulissenstein 52 und den Gegenanschlag 51 die Positionierscheibe 35 mitgedreht, da der Arretierhebel 57 ausgeschwenkt ist. Sobald die gewünschte Sitzlängslage erreicht ist und der Auslösebügel 22 losgelassen wird, schwenkt dieser infolge der in Sperrrichtung federbeaufschlagten Sperrklauen in seine aus Fig. 4a ersichtliche Ausgangslage zurück, wobei auch über die Sperrfeder 60 der Arretierhebel 57 in die aus den Fig. 4a und Fig. 6 ersichtliche Sperrlage zurückschwenkt und die Positionierscheibe 35 festlegt.

Wenn nun gegenüber dieser eingestellten Sitzlängslage zum bequemeren Einsteigen in den Fahrzeugfond die Rückenlehne 11 vorgeklappt und dabei der Sitz nach vorn geschoben werden soll, so erfolgt durch das Vorklappen der Lehne 11 über den Bowdenzug 23 eine Verschwenkung des Lösehebels 24 im Uhrzeigerdrehsinn um den Zapfen 26, so dass einerseits über seine Abwinklung 25 der hintere Bereich des Auslösebügels 22 niedergedrückt wird Dabei folgt der Zapfen 68 an der Hülse 63 dem im Uhrzeigerdrehsinn nach vorn schwenkenden Stellfinger 69 infolge der Beaufschlagung durch die Druckfeder 67 nach, so dass der Stößel 64 mit seinem das Gabelinnere des Gabelhebels 62 ausfüllenden Querkopf 72 in den Freiraum zwischen dem Gabelhebel 62 und dem Gehäuse 28 gelangt, so dass beim Niederdrücken des hinteren Bereichs des Auslösebügels 22 durch die Abwinklung 25 zum Niederdrücken des Querhebels 21 der Querkopf 72 des Stößels 64 nicht in Berührung mit der Steuerkurve 70 kommen kann, so dass der Arretierhebel 57 in der Verbindungslage seines Zahnsegments 58 mit der Sperrverzahnung 36 der Positionierscheibe 35 verbleibt. Der Beginn dieser Betätigungslage ist in Fig. 4b dargestellt. Bei niedergedrücktem Querhebel 21 kann jedoch infolge Ausgleitens der Sperrklauen 20 aus der Zahnreihe der Führungsschiene der Sitz nach vorn geschoben werden. Während dieser Verschiebebewegung des Sitzes lässt sich der Kulissenstein 52 vom Gegenanschlag 51 der Positionierscheibe 35 entfernen, da dieser in der Spiralkulisse 50 vom Anschlag 45 mitgenommen, ausweichen kann. Wenn nun der mit vorgeklappter Rückenlehne vorgeschobene Fahrzeugsitz in seine Ausgangslage zurückgeführt wird, so erfolgt gegen die Wirkung der Spiralfeder 40 eine Drehbewegung der Wickeltrommel 32, durch welche der Kulissenstein 52 infolge ihres Anschlages 45 wieder solange mitgenommen wird, bis der Kulissenstein 52 am unveränderten Gegenanschlag 51 der Positionierscheibe 35 zur Anlage kommt. Dann ist die ursprünglich eingestellte Sitzlängslage wieder erreicht.

Wie schon erwähnt, gibt die dargestellte und vorbeschriebene Ausführungsform den Erfindungsgegenstand nur beispielsweise wieder, der keinesfalls allein darauf beschränkt ist. Es sind vielmehr noch weitere Ausgestaltungen und Ausführungsformen des Erfindungsgegenstandes möglich. Überdies sind alle in der Zeichnung dargestellten und in der Beschreibung erwähnten Merkmale erfindungswesentlich, auch wenn sie in den Ansprüchen nicht ausdrücklich beansprucht sind.

### Bezugszeichenliste:

- 10: Sitzteil
- 11: Rückenlehne
- 12: Arretiereinrichtung
- 13: Handhabe
- 14: Schwenkpunkt
- 15: Laufschiene
- 16: Führungsschiene
- 17: Wälzkörper
- 18: Wälzkörper
- 19: Verriegelungseinrichtung
- 20: Sperrklaue
- 21: Querhebel
- 22: Auslösebügel
- 23: Bowdenzug
- 24: Lösehebel
- 25: Abwinklung
- 26: Zapfen
- 27: Halteplatte
- 28: Gehäuse
- 29: Gehäuseunterteil
- 30: Gehäuseoberteil
- 31: Positioniereinrichtung
- 32: Wickeltrommel
- 33: Clipsansatz
- 34: Achse
- 35: Positionierscheibe
- 36: Sperrverzahnung
- 37: Spiralfeder
- 38: Ausnehmung
- 39: Aussparung
- 40: Spiralfeder
- 41: Einschnürung
- 42: Zugglied
- 43: Einschubtasche
- 44: Halteplombe
- 45: Anschlag
- 46: Rippe
- 47: Fixierstück
- 48: Seitenwand
- 49: Nabe, von 3 5
- 50: Spiralkulisse
- 51: Gegenanschlag
- 52: Kulissenstein
- 53: Führungsrippe
- 54: Stirnseite, von 52
- 55: Führungsfinger
- 56: Ausschnitt
- 57: Arretierhebel
- 58: Zahnsegment
- 59: Zapfen
- 60: Sperrfeder
- 61: Nabe, von 57 und 62
- 62: Gabelhebel
- 63: Hülse
- 64: Stößel
- 65: Querrohr
- 66: Lagerbock
- 67: Druckfeder
- 68: Zapfen, an 63
- 69: Stellfinger
- 70: Steuerkurve
- 71: Kreisbahn
- 72: Querkkopf, an 64

## Patentansprüche

1. Längsverstellvorrichtung an einem Kraftfahrzeugsitz für insbesondere zweitürige Kraftfahrzeuge, dessen Rückenlehne (11) gegenüher dem Sitzteil (10) mittels eines Stellbeschlages neigungseinstellbar und nach Lösung einer Arretiereinrichtung (12) vorklappbar ist, wobei der Sitzteil (10) an in fahrzeugfesten Führungsschienen (16) verschiebbar angeordneten Laufschienen (15) befestigt ist, und wenigstens eine Laufschiene (15) eine aus der Verbindung mit der Führungsschiene (16) lösbare Verriegelungseinrichtung (19) aufweist, der eine die Wiederauffindung der eingestellten Sitzlängslage ermöglichende Positioniereinrichtung (31) zugeordnet ist, die eine Positionierscheibe (35) mit einer Sperrverzahnung (36) umfasst, in welche das Zahnsegment (58) eines in Bezug auf die Laufschiene (15) ortsfest gelagerten, bedarfsweise aussteuerbaren Arretierhebels (57) eingreift, wobei koaxial zur Positionierscheibe (35) eine federgespannte Wickeltrommel (32) gelagert ist, mit welcher über ein am Fahrzeugboden oder an der Führungsschiene (16) festgelegtes Zugglied (42) der Sitzteil (10) nach vorn verschiebbar ist, und die Wickeltrommel (32) einen Anschlag (45) zur Begrenzung ihrer Rückdrehbewegung durch einen Gegenanschlag (51) an der Positionierscheibe (35) aufweist,
**dadurch gekennzeichnet ,**
**dass** zwischen dem Anschlag (45) der Wickeltrommel (32) und dem Gegenanschlag (51) der Positionierscheibe (35) ein in einer Spiralkulisse (50) geführter, Umdrehungen der Wickeltrommel (32) ermöglichender Kulissenstein (52) angeordnet ist

2. Längsverstellvorrichtung nach Anspruch 1, **dadurch gekennzeichnet, dass** die Spiralkulisse (50) entweder in der der Wickeltrommel (32) zugekehrten Seitenwand (48) der Positionierscheibe(35) oder in der der Positionierscheibe (35) zugekehrten Wandung der Wickeltrommel (32), mehrere Umdrehungen der Wickeltrommel (32) gegenüber der Positionierscheibe (35) zulassend, angeordnet ist.

3. Längsverstellvorrichtung nach Anspruch 2, **dadurch gekennzeichnet, dass** der Kulissenstein (52) als Kreisringsegment ausgebildet ist und mit einer Führungsrippe (53) in die als Nut in die Seitenwand (48) der Positionierscheibe (35) eingetiefte Spiralkulisse (50) eingreift.

4. Längsverstellvorrichtung nach einem der vorhergehenden Ansprüche, **dadurch gekennzeichnet, dass** die Spiralkulisse (50) mit geringem radialem Abstand zur Nabe (49) der Positionierscheibe (35) beginnt und am radial knapp unterhalb der Sperrverzahnung angeordneten Gegenanschlag (51) an der Positionierscheibe (35) endet, wobei die Spiralkulisse (50) eine solche Steigung aufweist, dass der Kulissenstein (52) vor seinem letzten, mit seiner Bewegungskomponente radial nach außen gerichteten Umlauf unter dem Gegenanschlag (51) vorbeibewegbar ist.

5. Längsverstellvorrichtung nach Anspruch 4, **dadurch gekennzeichnet, dass** die Steigung der Spiralkulisse (50) veränderlich ausgelegt ist und ausgehend vom Gegenanschlag (51) mit einer die Passage des Kulissensteines (52) unter dem Gegenanschlag (51) nach einer Umdrehung ermöglichenden Steigung beginnt, die danach zur Unterbringung möglichst vieler Windungen reduziert ist und eine dichte Anordnung jeder Windungsumdrehung der Spiralkulisse (50) in radialer Richtung nebeneinander ermöglicht.

6. Längsverstellvorrichtung nach einem der vorhergehenden Ansprüche, **dadurch gekennzeichnet, dass** aus den beiden Stirnseiten (54) des Kulissensteines (52) jeweils ein zur Nabe (49) der Positionierscheibe (35) gerichteter Führungsfinger (55) austritt und die gabelförmig zueinander angeordneten Führungsfinger (55) die Nabe (49) an ihrem Außenumfang tangierend übergreifen.

7. Längsverstellvorrichtung nach einem der vorhergehenden Ansprüche, **dadurch gekennzeichnet, dass** der Anschlag (45) der Wickeltrommel (32) durch die axialen Außenwände einer Einschubtasche (43) für eine Halteplombe (44) des Zuggliedes (42) gebildet ist.

8. Längsverstellvorrichtung nach einem der vorhergehenden Ansprüche, **dadurch gekennzeichnet, dass** der Gegenanschlag (51) der Positionierscheibe (35) nur soweit von deren Seitenwand (48) absteht. dass Rippen (46) und Einschubtasche (43) der Wickeltrommel frei am Gegenanschlag (51) vorbeidrehbar sind.

## Claims

1. Longitudinal adjustment device on a motor vehicle seat for, in particular, two-door motor vehicles, the backrest (11) of which can be set in inclination in relation to the seat part (10) by means of an adjusting fitting and can be folded forwards after the release of an arresting apparatus (12), wherein the seat part (10) is fastened to running rails (15) disposed displaceably in guide rails (16) integral with the vehicle, and at least one running rail (15) has a locking apparatus (19) which can be released from the connection with the guide rail (16) and has, associated with it, a positioning apparatus (31) which permits the rediscovery of the longitudinal location of the seat that has been set, and comprises a positioning disc (35) with a blocking tooth system (36) in which the toothed segment (58) of an arresting lever (57), which is mounted in a stationary manner with respect to the running rail (15) and can be moved out if necessary, engages, and wherein there is mounted, coaxially with the positioning disc (35), a spring-tensioned winding drum (32) with the aid of which the seat part (10) can be displaced forwards via a traction member (42) secured to the vehicle floor or to the guide rail (16), and the winding drum (32) has a stop (45) for limiting its reversing movement by a counterstop (51) on the positioning disc (35),
**characterised in that**
a sliding block (52), which is guided in a spiral gate (50) and permits revolutions of the winding drum (32), is disposed between the stop (45) on the winding drum (32) and the counterstop (51) on the positioning disc (35).

2. Longitudinal adjustment device according to claim 1, **characterised in that** the spiral gate (50) is disposed either **in that** side wall (48) of the positioning disc (35) which faces towards the winding drum (32), or **in that** wall of the winding drum (32) which faces towards the positioning disc (35), in a manner that permits a number of revolutions of the winding drum (32) in relation.to the positioning disc (35).

3. Longitudinal adjustment device according to claim 2, **characterised in that** the sliding block (52) is constructed as a circular ring segment and engages, with the aid of a guide rib (53), in the spiral gate (50) which is let into the side wall (48) of the positioning disc (35) in the form of a groove.

4. Longitudinal adjustment device according to one of the preceding claims, **characterised in that** the spiral gate (50) begins at a slight radial distance from the hub (49) of the positioning disc (35) and ends at the counterstop (51) on the positioning disc (35), which counterstop is disposed radially just underneath the blocking tooth system, the spiral gate (50) having a pitch such that the sliding block (52) can be moved past, before its last turn which is directed radially outwards with its component of motion, under the counterstop (51).

5. Longitudinal adjustment device according to claim 4, **characterised in that** the pitch of the spiral gate (50) is of variable design and begins, starting out from the counterstop (51), with a pitch which permits the passage of the sliding block (52) under the counterstop (51) after one revolution and which, thereafter, is reduced in order to accommodate as many windings as possible and permits a tight disposition of each winding revolution of the spiral gate (50) side by side in the radial direction.

6. Longitudinal adjustment device according to one of the preceding claims, **characterised in that** a guide finger (55), which is directed towards the hub (49) of the positioning disc (35), emanates from each of the two end faces (54) of the sliding block (52), and said guide fingers (55), which are disposed in the form of a fork in relation to one another, straddle the hub (49) in a tangent manner at its outer periphery.

7. Longitudinal adjustment device according to.one of the preceding claims, **characterised in that** the stop (45) on the winding drum (32) is formed by the axial outer walls of a slide-in pocket (43) for a holding seal (44) of the traction member (42).

8. Longitudinal adjustment device according to one of the preceding claims, **characterised in that** the counterstop (51) on the positioning disc (35) protrudes from the side wall (48) of the latter only to an extent such that the ribs (46) and slide-in pocket (43) of the winding drum can be rotated freely past said counterstop (51).

## Revendications

1. Dispositif de réglage longitudinal sur un siège de véhicule automobile pour, en particulier, des véhicules automobiles à deux portes, dont le dossier (11) est susceptible d'être réglable en inclinaison par rapport à la partie d'assise (10), à l'aide d'une ferrure de réglage, et d'être rabattu vers l'avant après désolidarisation d'un dispositif de blocage (12), la partie d'assise (10) étant fixée sur des glissières de déplacement (15), disposées de façon déplaçable dans des glissières de guidage (16), fixées au véhicule, et au moins une glissière de déplacement (15) présentant un dispositif de verrouillage (19), susceptible d'être désolidarisé de la liaison à la glissière de guidage (16) et auquel est associé un dispositif de positionnement (31), permettant de retrouver la position longitudinale de siège réglée, le dispositif de réglage longitudinal comprenant un disque de positionnement (35) muni d'une denture de blocage (36), dans laquelle s'engage le segment denté (58) d'un levier de blocage (57), monté de façon localement fixe par rapport à la glissière de déplacement (15) et pouvant être commandé en cas de besoin, sachant que, coaxialement au disque de positionnement (35), est monté un tambour d'enroulement (32), tendu par un ressort, à l'aide duquel, par l'intermédiaire d'un organe de traction (42) fixé au plancher du véhicule ou à la glissière de guidage (16), la partie d'assise (10) est susceptible d'être déplacée vers l'avant, et le tambour d'enroulement (32) présentant une butée (45) pour limiter son mouvement de rappel en rotation au moyen d'une contre-butée (51), prévue sur le disque de positionnement (35),
**caractérisé en ce que**,
entre la butée (45) du tambour d'enroulement (32) et la contre-butée (51) du disque de positionnement (35), est disposé un patin de coulisse (52), guidé dans une coulisse spirale (50) et permettant que le tambour d'enroulement (32) puisse tourner.

2. Dispositif de réglage longitudinal selon la revendication 1, **caractérisé en ce que** la coulisse spirale (50) est disposée, soit dans la paroi latérale (48), tournée vers le tambour d'enroulement (32), du disque de positionnement (35), soit dans la paroi, tournée vers le disque de positionnement (35), du tambour d'enroulement (32), en permettant que le tambour d'enroulement (32) effectue plusieurs tours de rotation par rapport au disque de positionnement (35).

3. Dispositif de réglage longitudinal selon la revendication 2, **caractérisé en ce que** le patin de coulisse (52) est réalisé sous la forme de segments d'anneau circulaire et s'engage, par une nervure de guidage (53), dans la coulisse spirale (50), creusée, sous la forme de rainures, dans la paroi latérale (48) du disque de positionnement (35).

4. Dispositif de réglage longitudinal selon l'une des revendications précédentes, **caractérisé en ce que** la coulisse spirale (50) commence avec un faible espacement radial par rapport au moyeu (49) du disque de positionnement (35) et s'achève sur la contre-butée (51), disposée radialement juste au-dessous de la denture de blocage, sur le disque de positionnement (35), la coulisse spirale (50) présentant un pas tel que le patin de coulisse (52) puisse être déplacé sous la contre-butée (51) avant sa dernière rotation, ayant sa composante cinématique orientée radialement vers l'extérieur.

5. Dispositif de réglage longitudinal selon la revendication 4, **caractérisé en ce que** le pas de la coulisse spirale (50) est modifiable et, en partant de la contre-butée (51), commence par un pas permettant le passage du patin de coulisse (52), sous la contre-butée (51) après un tour de rotation et, ensuite, étant réduit, pour permettre de loger un nombre aussi grand que possible d'enroulements, et permet un agencement dense de chaque tour d'enroulement de la coulisse spirale (50), les uns à côté des autres en direction radiale.

6. Dispositif de réglage longitudinal selon l'une des revendications précédentes, **caractérisé en ce que**, hors des deux faces frontales (54) du patin de coulisse (52), sort chaque fois un doigt de guidage (55) orienté par rapport au moyeu (49) du disque de positionnement (35), et les doigts de guidage (55), disposés l'un par rapport à l'autre en forme de fourche, entourent de façon tangente le moyeu (49) sur sa périphérie extérieure.

7. Dispositif de réglage longitudinal selon l'une des revendications précédentes, **caractérisé en ce que** la butée (45) du tambour d'enroulement (32) est formée par les parois extérieures axiales d'une poche d'introduction (43), pour un plomb de maintien (44) de l'organe de traction (42).

8. Dispositif de réglage longitudinal selon l'une des revendications précédentes, **caractérisé en ce que** la contre-butée (51) du disque de positionnement (35) fait saillie de sa paroi latérale (48), uniquement d'une valeur telle que des nervures (46) et la poche d'introduction (43) du tambour d'enroulement puissent passer librement sur la contre-butée (51) lors de la rotation.
